Europäisches Patentamt

European Patent Office

Office européen des brevets

(19)

(11) Numéro de publication : **0 178 215**
**B1**

(12)

# FASCICULE DE BREVET EUROPÉEN

(45) Date de publication du fascicule du brevet :
**11.11.87**

(51) Int. Cl.⁴ : **F 28 D   7/00**, F 28 F   9/00

(21) Numéro de dépôt : **85401879.3**

(22) Date de dépôt : **25.09.85**

(54) Echangeur de chaleur pour le refroidissement d'un fluide par de l'air.

(30) Priorité : **05.10.84 FR 8415281**
**01.03.85 FR 8503084**

(43) Date de publication de la demande :
**16.04.86 Bulletin 86/16**

(45) Mention de la délivrance du brevet :
**11.11.87 Bulletin 87/46**

(84) Etats contractants désignés :
**AT BE CH DE GB IT LI LU NL SE**

(56) Documents cités :
**CH-A-   161 658**
**DE-A- 2 609 113**
**FR-A- 1 072 106**
**FR-A- 1 235 872**
**FR-A- 2 310 543**
**FR-A- 2 324 977**
**FR-A- 2 360 059**
**FR-A- 2 488 382**
**FR-A- 2 527 324**
**US-A- 3 305 006**

(73) Titulaire : **NOVATOME**
**La Boursidière R.N. 186**
**F-92357 Le Plessis Robinson (FR)**

(72) Inventeur : **Schutzenberger, Philippe**
**17 rue Singer**
**F-75016 Paris (FR)**
Inventeur : **Fernandez, Luis**
**22 Impasse Cerisaie**
**F-92120 Palaiseau (FR)**

(74) Mandataire : **Bressand, Georges et al**
**c/o CABINET LAVOIX 2 Place d'Estienne d'Orves**
**F-75441 Paris Cedex 09 (FR)**

## Description

L'invention concerne un échangeur de chaleur pour le refroidissement d'un fluide par de l'air.

Dans les réacteurs nucléaires à neutrons rapides refroidis par un métal liquide tel que le sodium, il est nécessaire de prévoir un dispositif de refroidissement de ce métal liquide constituant le fluide primaire du réacteur pour évacuer la puissance résiduelle du cœur du réacteur après son arrêt. En effet, les assemblages combustibles acquièrent une certaine activité sous l'effet des réactions nucléaires pendant le fonctionnement du réacteur et, après arrêt de ce réacteur, il reste une puissance résiduelle dans le cœur qui doit être évacuée pour éviter un échauffement inacceptable.

Le dispositif de refroidissement du réacteur après arrêt doit pouvoir fonctionner en toutes circonstances et en particulier même dans le cas d'une panne de l'alimentation électrique du réacteur nucléaire. Le dispositif de refroidissement comporte généralement un échangeur de chaleur sodium-sodium plongeant dans la cuve du réacteur renfermant le cœur, remplie de sodium liquide primaire. Le sodium secondaire de l'échangeur sodium-sodium est lui-même refroidi dans un échangeur de chaleur sodium-air disposé à l'extérieur de la cuve du réacteur nucléaire.

On pourrait également envisager un refroidissement direct du sodium primaire dans un échangeur de chaleur sodium-air.

Un tel échangeur sodium-air peut être constitué par des tubes reliés à l'une de leurs extrémités à un collecteur d'arrivée de sodium liquide chaud et à leur autre extrémité à un collecteur d'évacuation de sodium refroidi. Ces tubes sont disposés dans une zone parcourue par un courant d'air de refroidissement en circulation naturelle ou forcée.

On a proposé, en particulier dans le brevet FR-A-2 566 108 (publié le 20.12.85), d'assembler des tubes placés verticalement pour constituer un ou plusieurs panneaux qui sont ensuite disposés dans une zone de circulation d'air de refroidissement à la base d'une cheminée permettant éventuellement d'assurer la circulation de l'air sans utilisation d'élément motorisé tel qu'un ventilateur. Des ventelles de réglage du débit de l'air en circulation sont associées au panneau qui constitue ainsi un élément modulaire qui peut être associé à d'autres éléments identiques lors de son montage sur le site du réacteur nucléaire.

Cependant, le réglage du débit de l'air de refroidissement dans chacun des panneaux tubulaires de l'échangeur peut présenter certaines difficultés et la conception du système de commande des ventelles associées aux panneaux pose certains problèmes techniques difficiles à résoudre. De plus, il est souhaitable de construire l'ensemble de l'échangeur en usine et de ne réaliser sur le site que les raccordements des collecteurs aux conduites d'arrivée et de récupération du sodium liquide. L'échangeur doit avoir dans ce cas une structure unitaire et compacte permettant de faciliter son montage sur le bâtiment du réacteur.

On a proposé, dans le DE-A-2 609 113, une installation de climatisation à très grande échelle comportant des tours de réfrigération dans lesquelles on aspire de l'air atmosphérique grâce à des ventilateurs, pour refroidir cet air par passage au contact des tubes d'un échangeur de chaleur dans lesquels circule de l'eau. L'échangeur de chaleur délimite un conduit recevant l'air à refroidir avant que cet air ne traverse l'échangeur de l'intérieur vers l'extérieur en se refroidissant. L'air refroidi est ensuite dirigé vers la sortie de la tour de refroidissement. L'air circule de haut en bas dans toute la traversée de la tour de refroidissement.

Un tel dispositif a un fonctionnement très différent de celui d'un échangeur sodium-air qui utilise l'air comme fluide de refroidissement.

D'autre part la circulation de l'air de haut en bas nécessite des moyens de mise en circulation qui doivent être alimentés par une source d'énergie.

Dans le FR-A-1 072 106, est décrit un radiateur pour le refroidissement d'un moteur qui comporte un faisceau tubulaire dont les tubes sont disposés suivant plusieurs rangées cylindriques ayant un même axe vertical. Les tubes du faisceau sont reliés à leurs extrémités inférieures à un premier collecteur torique et à leurs extrémités supérieures à un second collecteur torique ayant son axe confondu avec l'axe du premier collecteur et avec l'axe vertical des rangées de tubes.

Le fond inférieur du faisceau tubulaire est fermé cependant que son ouverture supérieure reçoit un ventilateur permettant d'aspirer de l'air qui traverse le faisceau tubulaire de l'extérieur vers l'intérieur pour ressortir à la partie supérieure ouverte du faisceau. Un tel dispositif doit utiliser un ventilateur pour la mise en circulation de l'air et nécessite donc la présence d'une source d'énergie pour entraîner le ventilateur.

Le but de l'invention est donc de proposer un échangeur de chaleur pour le refroidissement d'un métal liquide par de l'air, comportant un ensemble de tubes verticaux disposés dans une zone balayée par un courant d'air de refroidissement suivant au moins une rangée dans laquelle les axes des tubes sont disposés suivant des génératrices régulièrement espacées d'une surface cylindrique à axe vertical et reliés à leur extrémité supérieure à un collecteur d'arrivée et de distribution de métal liquide chaud et à leur extrémité inférieure à un collecteur de récupération de métal liquide refroidi, ces collecteurs étant de forme torique et ayant pour axe de révolution l'axe de la surface cylindrique sur laquelle sont disposés les axes des tubes, cet échangeur de chaleur ayant une grande capacité de refroidissement et une structure unitaire et compacte et pouvant fonctionner sans utiliser une source d'énergie auxiliaire.

Dans ce but :

la portion d'espace de forme cylindrique limitée par la rangée de tubes est fermée à sa partie supérieure par un déflecteur d'air et mise en communication à sa partie inférieure, en-dessous des tubes, avec un conduit vertical d'arrivée d'air de refroidissement,

et l'ensemble des tubes est entouré sur toute sa hauteur par une enveloppe dont le volume interne est en communication à sa partie supérieure avec un conduit vertical d'évacuation de l'air de refroidissement ayant circulé au contact des tubes entre la portion d'espace située à l'intérieur de la rangée de tubes et le volume interne de l'enveloppe, à l'extérieur de la rangée de tubes.

Si l'on ne dispose pas d'un moyen de fermeture efficace du conduit d'arrivée ou du conduit d'évacuation d'air de l'échangeur, il circule à l'intérieur de cet échangeur, même lorsqu'il n'est pas en service, un débit d'air de refroidissement. Cet air de refroidissement circule en particulier au contact des tubes qui sont remplis de sodium liquide. Lorsque l'échangeur de chaleur n'est pas en service, le sodium circule à l'intérieur d'un circuit fermé d'une capacité relativement faible et est réchauffé par le fluide primaire du réacteur ; ce sodium remplissant le circuit de l'échangeur de chaleur est donc maintenu à une température proche de la température primaire (500 °C). Dans cet état, l'échangeur est disponible immédiatement pour un arrêt normal ou pour un arrêt d'urgence du réacteur. Un échangeur sodium-air selon l'invention n'est en fait utilisé que pour le refroidissement du réacteur lors de sa mise à l'arrêt. Pendant toutes les autres phases de fonctionnement du réacteur nucléaire, l'échangeur de chaleur n'est pas en service.

Le débit d'air de refroidissement résiduel en circulation dans l'échangeur de chaleur en position hors service conduit donc à une dépense d'énergie supplémentaire du circuit primaire du réacteur pendant toutes les phases de fonctionnement normal du réacteur.

En outre, le conduit supérieur d'évacuation de l'air de refroidissement est raccordé à une cheminée débouchant dans l'atmosphère au-dessus du bâtiment de la centrale nucléaire. De l'eau de pluie risque donc de venir tomber dans la zone d'échange thermique renfermant le sodium liquide, ce qui est tout à fait néfaste pour la sécurité de l'échangeur de chaleur.

Dans un mode de réalisation préférentiel, l'échangeur de chaleur comporte donc au moins un dispositif de fermeture associé à l'un au moins des conduits d'arrivée ou d'évacuation d'air de refroidissement et constitué par un couvercle plein d'une forme et d'une dimension correspondant sensiblement à celles de la section transversale du passage interne du conduit ou de l'extrémité de l'enveloppe en communication avec le conduit, ayant une couronne d'appui à sa périphérie, le dispositif de fermeture étant mobile dans la direction verticale et associé à des moyens de guidage et à des moyens de déplacement entre une position de fermeture où le dispositif est en appui par sa partie périphérique, sur une surface de fermeture du conduit ou de l'enveloppe par l'intermédiaire d'un joint d'étanchéité et une position d'ouverture où le dispositif est éloigné de la surface de fermeture du conduit ou de l'enveloppe.

L'invention est également relative à un échangeur de chaleur comportant des moyens de fermeture de la partie supérieure de l'enveloppe qui participent à l'étanchéité du circuit d'air et évitent que de l'eau de pluie ne tombe dans la zone d'échange thermique, par l'intermédiaire de la cheminée et du conduit d'évacuation de l'air de refroidissement.

Afin de bien faire comprendre l'invention on va maintenant décrire, en se référant aux figures jointes en annexe, deux modes de réalisation d'un échangeur de chaleur placé dans un circuit recevant le sodium liquide secondaire échauffé par le sodium liquide primaire de refroidissement d'un réacteur nucléaire à neutrons rapides.

La Fig. 1 est une vue en coupe par un plan vertical de symétrie d'un échangeur de chaleur suivant l'invention et suivant un premier mode de réalisation.

La Fig. 2 est une vue agrandie du détail A de la Fig. 1.

La Fig. 2a est une vue suivant C de la figure 2.

La Fig. 3 est une vue agrandie du détail B de la Fig. 1.

La Fig. 3a est une vue suivant D de la Fig. 3.

La Fig. 4 est une vue en coupe par un plan vertical de symétrie de la partie inférieure et de la partie médiane d'un échangeur de chaleur selon l'invention et selon un second mode de réalisation incluant un dispositif de fermeture des conduits d'arrivée et d'évacuation d'air.

La Fig. 5 est une vue en coupe par un plan vertical de symétrie, à plus grande échelle, de la partie supérieure de l'échangeur de chaleur selon le second mode de réalisation.

La Fig. 5A est une vue de dessus suivant AA de la Fig. 5.

La Fig. 6A est une vue agrandie du détail A de la Fig. 4.

La Fig. 6B est une vue de dessus suivant B de la Fig. 1.

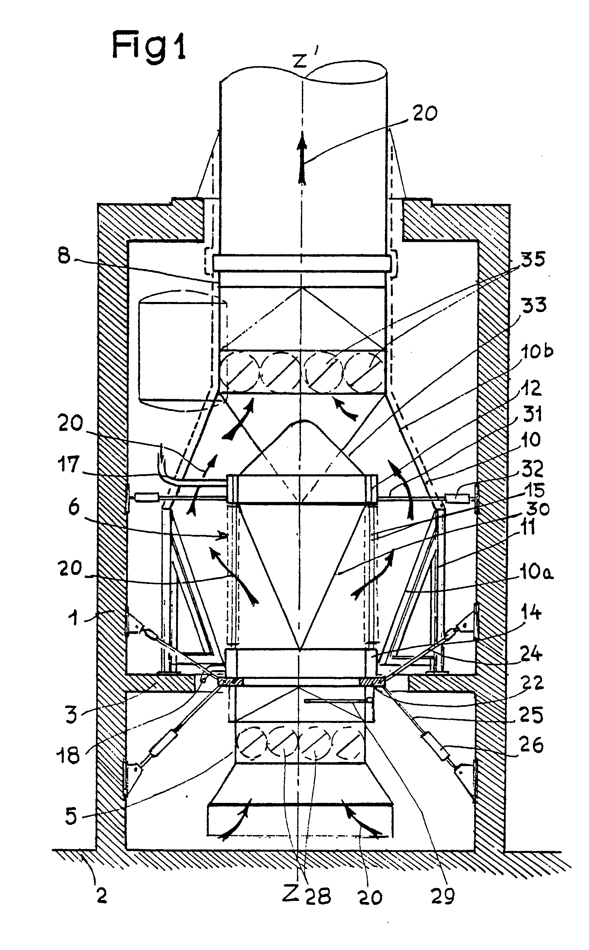

Sur la Fig. 1, on voit le local 1 de l'échangeur de chaleur reposant sur la structure 2 du bâtiment du réacteur nucléaire à neutrons rapides.

Le local 1 comporte une ouverture d'entrée d'air à sa partie inférieure et une plateforme support 3 au-dessus de cette ouverture.

L'échangeur de chaleur comporte de bas en haut un conduit d'arrivée d'air à axe vertical 5, une partie d'échange thermique 6 et un conduit d'évacuation d'air 8 coaxial au conduit d'entrée 5.

Autour de la partie centrale d'échange thermique 6 est disposée une enveloppe 10 maintenue par une structure de support 11 reposant sur la plateforme 3. L'enveloppe 10 est reliée au conduit d'évacuation 8 à sa partie supérieure pour la mise en communication du volume intérieur de l'enveloppe 10 et de ce conduit 8.

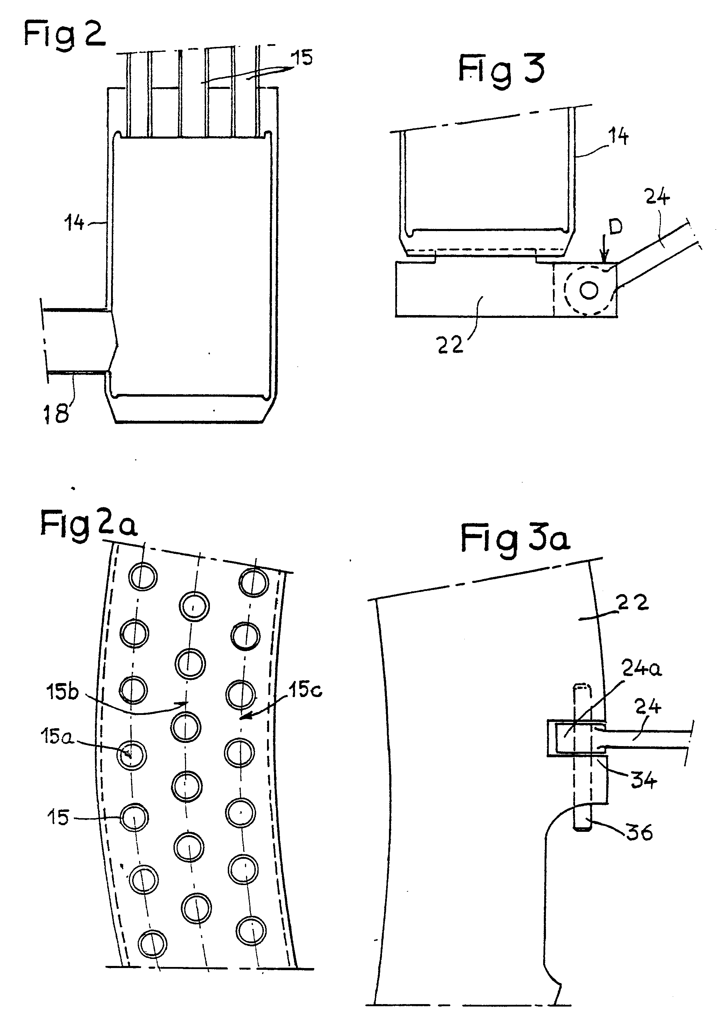

On va maintenant décrire en se référant à l'ensemble des figures, la partie centrale d'échange 6 qui comporte un collecteur torique supérieur 12, un collecteur torique inférieur 14 et un ensemble de tubes verticaux 15 disposés suivant trois rangées 15a, 15b et 15c, comme il est visible sur la Fig. 2a. Dans chacune des rangées, les tubes verticaux 15 sont disposés de façon que leurs axes constituent des génératrices régulièrement espacées d'une surface cylindrique ayant pour axe l'axe vertical ZZ' de l'échangeur de chaleur. Les tubes 15 de deux rangées successives sont décalés circonférentiellement suivant une disposition en quinconce.

A leurs extrémités, les tubes 15 sont reliés aux collecteurs 12 ou 14 de façon à mettre en communication le volume interne de ces deux collecteurs à section méridienne rectangulaire.

Le collecteur supérieur 12 reçoit du sodium liquide chaud venant d'un échangeur sodium-sodium plongeant dans la cuve du réacteur nucléaire à neutrons rapides par une conduite 17 traversant l'enveloppe 10. Le collecteur inférieur 14 est relié à une conduite 18 d'évacuation du sodium liquide ayant circulé dans les tubes 15 dont la surface externe constitue la surface d'échange thermique de l'échangeur.

Le collecteur supérieur 12 distribue de façon sensiblement homogène le sodium liquide chaud dans les tubes 15. Le sodium liquide chaud circule ensuite par thermo-gravité ou par circulation forcée dans ces tubes dans lesquels il se refroidit, les surfaces externes des tubes étant balayées par un courant d'air 20 circulant depuis la portion d'espace disposée à l'intérieur des rangées de tubes jusqu'à la zone du volume intérieur de l'enveloppe 10 située à l'extérieur des rangées de tubes. Le sodium refroidi est ensuite récupéré par le collecteur 14.

Le collecteur inférieur 14 repose sur une plaque support 22 qui est fixée à l'intérieur du local 1 par des tirants obliques 24 fixés sur les murs du local 1 et par des dispositifs anti-sismiques 25 comportant des éléments autobloquants 26.

Le conduit d'entrée renferme des ventelles 28 de réglage du débit d'air de refroidissement entrant dans le conduit 5 en communication avec le volume intérieur de la partie d'échange 6 de l'échangeur de chaleur.

Au moins une canne chauffante 29 à alimentation électrique permet de préchauffer l'échangeur afin de le remplir de sodium sans risque de gel lors du remplissage du circuit.

Les tubes 15 comportent des ailettes sur leur surface externe, pour augmenter la surface d'échange thermique. Ces tubes peuvent être lisses à simple ou à double paroi ; dans ce dernier cas, lorsque le sodium est le sodium primaire, on augmente la sécurité du dispositif.

La portion d'espace de forme cylindrique disposée à l'intérieur des rangées de tubes 15 est fermée à sa partie supérieure par un déflecteur 30 permettant de dévier les courants d'air de refroidissement 20 vers l'extérieur.

L'enveloppe externe 10 est constituée de deux viroles tronconiques d'axe ZZ', la virole inférieure 10a étant évasée vers le haut et la virole supérieure 10b évasée vers le bas. Ces deux viroles se raccordent au voisinage de la partie supérieure des tubes 15. Dans cette zone, le collecteur supérieur 12 qui peut se déplacer sous l'effet de la dilatation des tubes est guidé axialement par rapport aux parois du local 1, par l'intermédiaire de tirants 31 et éventuellement de dispositifs autobloquants 32. Au-dessus du collecteur 12 est également fixé à l'intérieur de l'enveloppe 10 un déflecteur conique 33 d'axe ZZ'.

La partie supérieure de la virole tronconique 10b se raccorde au conduit supérieur d'évacuation d'air 8 à l'entrée duquel sont disposées des ventelles de réglage de débit 35.

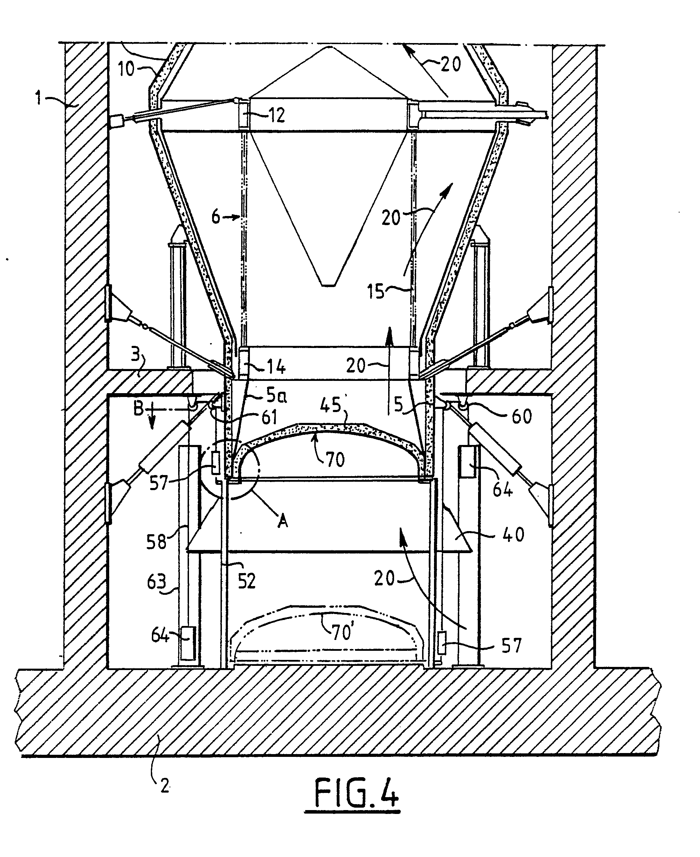

Sur les Fig. 3 et 3a, on voit plus en détail la fixation de l'extrémité des tirants 24 sur la plaque annulaire de support 22. Les tirants 24 comportent chacun une chape 24a à leur extrémité engagée dans un embrèvement 34 de la plaque 22 dans lequel débouche des deux côtés un trou d'axe permettant l'engagement d'un axe 36 dans la chape 24a pour l'assemblage articulé du tirant 24 et de la plaque de support annulaire 22.

Le fonctionnement de l'échangeur de chaleur décrit en se référant aux figures est le suivant : du sodium liquide chaud venant de la partie secondaire d'un échangeur sodium-sodium plongeant dans la cuve du réacteur nucléaire est distribué par le collecteur 12 dans les tubes 15 puis récupéré après circulation dans les tubes 15 par le collecteur 14 et le conduit de récupération 18 pour être recyclé dans la partie secondaire de l'échangeur sodium-sodium permettant le refroidissement du sodium primaire remplissant la cuve du réacteur.

Un courant d'air 20 entre dans le local 1 par son ouverture inférieure, pénètre dans le conduit d'entrée 5 puis dans la portion d'espace à l'intérieur des rangées de tubes 15 où ce courant d'air de refroidissement 20 est dirigé vers l'extérieur par le déflecteur 30. Le courant d'air de refroidissement traverse les rangées de tubes sur toute leur longueur et permet le refroidissement du sodium liquide circulant dans ces tubes. L'air de refroidissement arrive ensuite dans la partie du volume interne de l'enveloppe 10 située à l'extérieur des rangées de tubes puis se dirige vers le haut pour pénétrer dans le conduit de sortie 8.

La circulation de l'air est assurée par convection naturelle et grâce au tirage dans le conduit de sortie vertical 8.

On peut également utiliser un ventilateur placé par exemple dans le conduit d'entrée 5 pour favoriser la circulation d'air de refroidissement dans l'échangeur de chaleur.

Dans le cas d'un échangeur de chaleur d'une puissance thermique de 27MW utilisé pour le refroidissement d'un réacteur nucléaire à neutrons rapides à l'arrêt, la partie d'échange thermique 6 comporte quatre cent vingt tubes verticaux d'un diamètre intérieur de 0,05 mètre comportant des ailettes de refroidissement externes et disposés sur trois rangées coaxiales dans une disposition en forme de tambour ou de cage d'écureuil.

Le diamètre moyen de ce tambour identique au diamètre du conduit d'entrée 5 est de l'ordre de cinq mètres pour un diamètre du conduit de sortie 8 de l'ordre de six mètres.

On va maintenant se reporter aux Fig. 4 à 6B pour décrire un échangeur de chaleur comportant des moyens de fermeture efficaces du conduit d'arrivée et du conduit d'évacuation d'air pour la mise à l'arrêt de l'échangeur de chaleur. Les éléments correspondants sur les Fig. 1 à 3a d'une part et 4 à 6B d'autre part comportent les mêmes repères.

L'échangeur de chaleur est disposé à l'intérieur d'un local 1 reposant sur la structure 2 du bâtiment du réacteur nucléaire à neutrons rapides. Le local 1 comporte une ouverture d'entrée d'air à sa partie inférieure et une plateforme support 3 au-dessus de cette ouverture. La partie d'échange thermique 6 de l'échangeur comportant plusieurs rangées de tubes verticaux 15 est placée à l'intérieur d'une enveloppe 10 dont la partie inférieure est solidaire d'un conduit 5 d'arrivée d'air de refroidissement dans l'échangeur. Le conduit 5, l'enveloppe 10 et l'ensemble d'échange 6 ont un même axe de symétrie de révolution vertical.

Les tubes 15 de la partie d'échange 6 sont reliés à leur partie supérieure à un collecteur torique 12 de distribution du sodium chaud dans les tubes 15 et, à leur partie inférieure, à un collecteur torique 14 de récupération et d'évacuation du sodium refroidi.

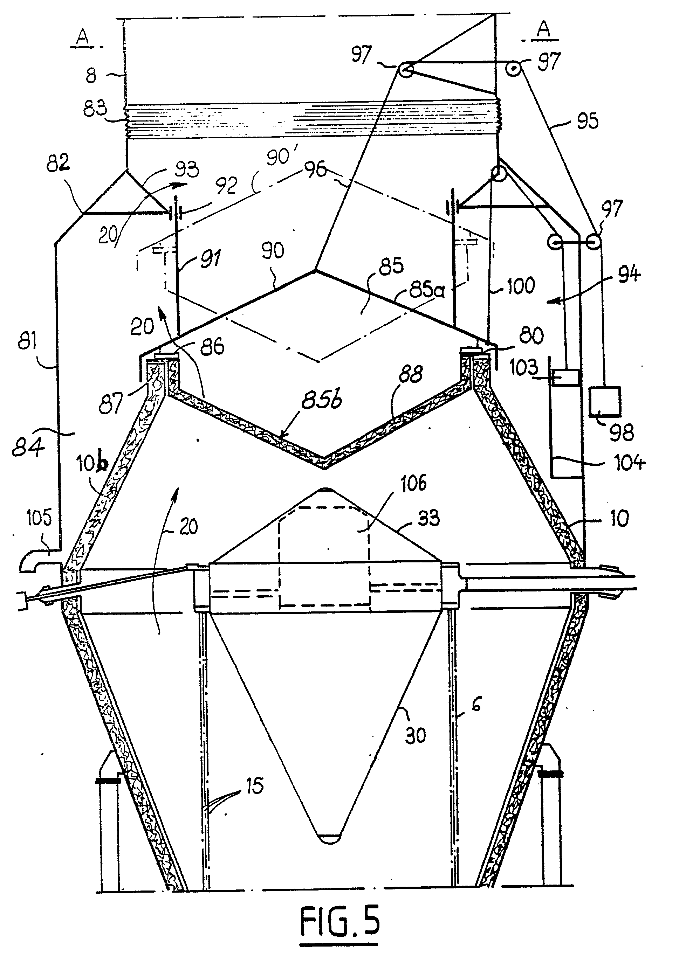

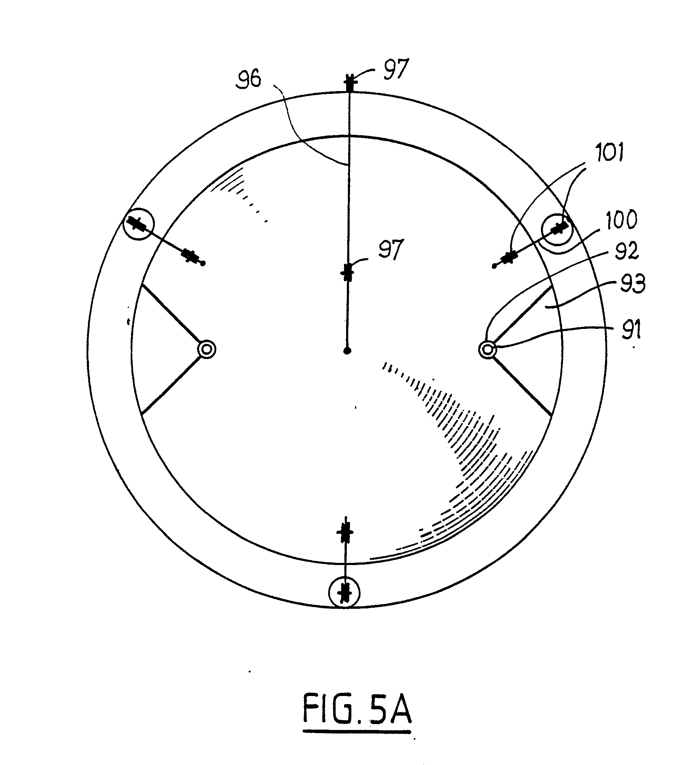

L'air de refroidissement circule de bas en haut dans l'échangeur de chaleur suivant la direction des flèches 20. Cet air de refroidissement est amené par le conduit d'arrivée 5 dans le volume intérieur des rangées de tubes 15, traverse ces rangées de tubes pour pénétrer dans la partie de l'enveloppe 10 extérieure aux tubes puis est récupéré par le conduit d'évacuation 8 et une cheminée représentés sur la Fig. 5.

Sur la Fig. 5, on voit la partie supérieure 10a de l'enveloppe 10 de forme tronconique, dont la petite base est située à l'extrémité supérieure et constitue la surface de fermeture 80 de cette enveloppe équipée d'un joint d'étanchéité 87. La partie 10a de l'enveloppe est entourée par une partie élargie 81 du conduit 8 d'évacuation de l'air de refroidissement. La partie 81 est reliée à la partie supérieure du conduit qui constitue une cheminée par une pièce de liaison tronconique 82. La cheminée prolongeant le conduit 8 dans la direction verticale débouche dans l'atmosphère au-dessus du bâtiment de la centrale : un soufflet de dilatation 83 est intercalé sur le conduit 8 constituant la base de la cheminée. La partie 81 du conduit est fixée sur la partie tronconique 10a de l'enveloppe 10 au voisinage de sa partie inférieure, c'est-à-dire au niveau de sa grande base : une chambre annulaire 84 à section décroissante vers le bas est ainsi délimitée autour de l'enveloppe 10.

Un dispositif de fermeture désigné de façon générale par le repère 90 peut être mis en position de fermeture, telle que représentée en traits pleins sur la Fig. 5 ou en position d'ouverture telle que représentée en traits mixtes sur la Fig. 5 (Position 90').

Le dispositif 90 comporte un couvercle 85, des moyens de guidage de ce couvercle dans la direction verticale et des moyens de déplacement du couvercle entre ses positions 90 et 90'.

Le couvercle 85 est constitué par deux parois coniques 85a et 85b coaxiales, fixées l'une sur l'autre par l'intermédiaire de viroles cylindriques de faible hauteur et d'une pièce plate annulaire 86 destinée à venir s'appuyer sur le joint d'étanchéité 87 ; les sommets des parois coniques 85a et 85b sont situés de part et d'autre de leur partie de jonction.

La paroi conique inférieure 85b est doublée par une couche de matériau calorifuge 88 ; son sommet est dirigé vers la partie d'échange 6. La paroi conique supérieure 85a qui a son sommet dirigé vers la cheminée constitue une surface inclinée de guidage pour le ruissellement de l'eau de pluie pénétrant dans la cheminée 8 et son recueil dans l'espace annulaire 84 compris entre l'enveloppe 10 et la partie 81 du conduit ; à cet effet, la partie périphérique de la paroi conique 85a a un diamètre suffisant pour venir recouvrir la surface d'appui 80 de l'enveloppe, lorsque le dispositif 90 est en position de fermeture et cette paroi conique 85a est complétée, à l'extérieur, par une courte virole cylindrique.

Comme il est visible sur les Fig. 5 et 5A, les moyens de guidage du couvercle 85 sont constitués par deux tiges de guidage 91 verticales fixées sur la paroi conique supérieure 85a du couvercle 85 et par deux paliers fixes 92 à rotules inverses portés par deux supports 93 fixés sur le conduit 8. Les paliers à rotules inverses 92 sont constitués chacun par deux surfaces de guidage en forme de secteurs sphériques disposées l'une en vis-à-vis de l'autre ; de tels paliers de guidage permettent d'éviter tout coincement des tiges 91 pendant le mouvement du couvercle 85, même si celui-ci a tendance à se mettre légèrement en biais.

Les moyens d'équilibrage et de déplacement du couvercle 85 comportent un ensemble d'équilibrage 94 constitué par trois dispositifs identiques placés à 120° autour du couvercle et un moyen de déplacement 95 constitué par une chaîne 96 fixée au sommet de la paroi conique 85a, par des poulies de renvoi 97 et par un moyen de commande motorisé 98.

Chacun des dispositifs d'équilibrage est constitué par une chaîne 100, deux poulies de renvoi 101 et un contrepoids 103 se déplaçant dans un puits 104 solidaire du conduit 8. L'ensemble 94 n'équilibre que partiellement le poids du couvercle si bien que le mouvement vers le bas de ce couvercle pour aller de la position 90' à la position 90 du dispositif de fermeture est assuré par gravité, le moyen de commande 98 n'exerçant qu'un effort résistant. De plus, dans la position de fermeture 90, le couvercle 85 exerce une certaine pression sur la surface de fermeture 80, par l'intermédiaire du joint d'étanchéité 87. La fermeture de la partie supérieure de l'enveloppe 10 est ainsi parfaitement étanche et l'air de refroidissement ne peut circuler du volume intérieur de l'enveloppe 10 vers le conduit 8 et la cheminée.

En position de fermeture, le dispositif 90 permet donc à la fois d'éviter que de l'eau de pluie n'arrive jusque dans la zone d'échange 6 et que de l'air ne circule dans le dispositif d'échange.

L'eau de pluie récupérée dans l'espace annulaire 84 entre l'enveloppe 10 et le conduit 81 peut être évacuée par des purges 105.

En position d'ouverture 90', le dispositif 90 permet le passage de l'air de refroidissement (flèches 20) entre sa périphérie et la paroi de la partie élargie 81 du conduit 8.

Entre le déflecteur conique 30 qui assure la fermeture du volume interne des rangées de tubes 15 et le guidage de l'air de refroidissement vers l'extérieur et le déflecteur conique 33, l'un et l'autre fixés au collecteur supérieur 14, avec leurs sommets dirigés dans des directions opposées, est ménagé un espace dans lequel peut être logé le réservoir d'expansion 106 du circuit de sodium.

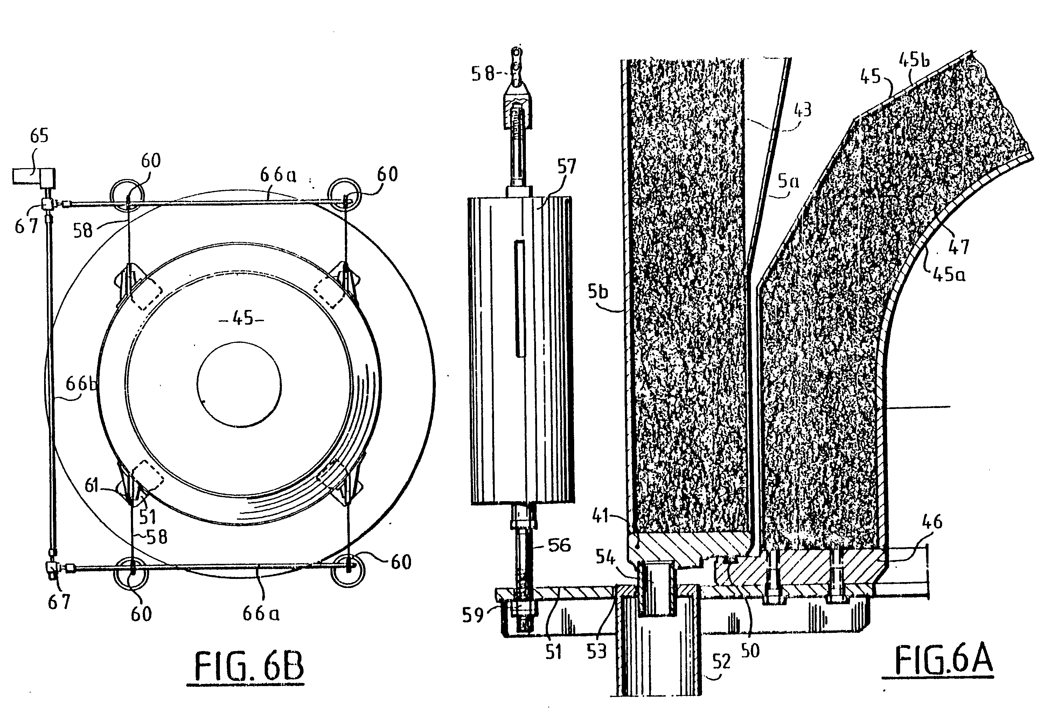

On va maintenant se reporter de nouveau à la Fig. 4 ainsi qu'aux Fig. 6A et 6B pour décrire la partie inférieure de l'échangeur de chaleur.

La base du conduit 5 d'arrivée d'air est constituée par une hotte 40 évasée vers le bas. Cette hotte 40 se raccorde à sa partie inférieure au conduit proprement dit dont la section intérieure décroît de bas en haut, le conduit 5 comportant une virole interne de forme tronconique 5a dont la partie supérieure se termine au niveau du collecteur inférieur 14. cette virole 5a, ainsi qu'il est visible sur les Fig. 4 et 6A, comporte une partie inférieure cylindrique soudée suivant le contour intérieur d'une plaque annulaire 41. La paroi externe 5b du conduit 5, de forme cylindrique, est soudée suivant le contour extérieur de la plaque 41 à son extrémité inférieure et se raccorde à l'enveloppe 10 à son extrémité supérieure. Un calorifuge 43 recouvre la surface interne de la paroi 5b. La plaque annulaire 41 constitue l'extrémité de fermeture du conduit 5 d'arrivée d'air.

En se référant à l'ensemble des Fig. 4, 6A et 6B, on va maintenant décrire le dispositif de fermeture du conduit d'arrivée d'air. Ce dispositif est constitué par un couvercle 45 à double paroi 45a et 45b soudées à leur partie inférieure à une plaque annulaire 46 constituant la couronne d'appui du dispositif de fermeture. La paroi interne du couvercle 45a comporte une partie bombée en forme de calotte sphérique et une partie cylindrique soudées l'une sur l'autre. La paroi interne 45b est constituée par des portions cylindriques, des portions tronconiques et une plaque plane circulaire. Entre les parois 45a et 45b est disposé un matériau calorifuge 47.

La plaque annulaire 46 porte sur sa surface supérieure et à sa périphérie un joint d'étanchéité 50 destiné à venir s'appuyer sur la surface inférieure de la plaque annulaire 41 constituant la surface de fermeture du conduit 5. Sur la plaque annulaire 46, sont fixées quatre pattes 51 à 90° permettant le guidage et le déplacement du dispositif de fermeture. Des colonnes verticales de guidage 52 sont fixées à leur partie inférieure dans la structure 2 du réacteur en des positions situées à 90° les unes des autres, autour de l'axe vertical du dispositif. La position de ces colonnes 52 correspond à la position des pattes 51 qui sont percées d'ouvertures 53 dont la dimension et la position correspondent à la dimension et à la position des colonnes 52. Les pattes 51 sont engagées sur les colonnes 52 grâce à leurs ouvertures 53, comme il est visible sur la Fig. 6A. Les colonnes 52 comportent une ouverture à leur partie supérieure qui est engagée sur un élément de centrage et de maintien 54 qui est porté par la plaque annulaire 41 à la partie inférieure du conduit 5. L'ensemble de fermeture 45-46 est donc guidé dans la direction verticale par l'intermédiaire des pattes 51 et des colonnes 52.

D'autre part, chacune des pattes 51 reçoit sur sa partie extérieure l'extrémité d'une tige 56 solidaire d'une boîte à ressort 57 assurant une liaison élastique entre une chaîne 58 et la patte 51 solidaire du dispositif de fermeture. Un écrou 59 assure la liaison pendant l'entraînement du dispositif de fermeture vers le haut par l'intermédiaire de la chaîne 58 passant sur des poulies de renvoi 60 et 61 et reliée à son extrémité à un contrepoids 64 se déplaçant dans une colonne verticale 63.

On voit sur la Fig. 6B que le dispositif de fermeture est déplacé verticalement par un ensemble de quatre dispositifs de levage identiques associés chacun à une patte 51 solidaire de la couronne d'appui 46 du dispositif de fermeture.

L'ensemble de ces dispositifs de levage est actionné par un motoréducteur 65 entraînant deux arbres 66a portant chacun deux poulies à chaînes 60, par l'intermédiaire de dispositifs de renvoi d'angle 67 et d'un arbre de transmission 66b. L'ensemble de levage permet de déplacer le dispositif de fermeture entre sa position haute 70 ou position de fermeture et sa position basse 70' ou position d'ouverture (Fig. 4). Dans la position haute 70 du dispositif de fermeture, le joint torique 50 de l'anneau d'appui 46 du couvercle est mis en appui avec une certaine pression sur la face inférieure de la plaque annulaire 41 constituant l'extrémité de fermeture du conduit 5. Cette pression est exercée par l'action des contrepoids 64 agissant par l'intermédiaire des chaînes 58 et des boîtes à ressort 57 jouant le rôle de limiteur d'effort. Dans cette position, le couvercle et sa couronne d'appui 46 ferment complètement le conduit 5 et aucun débit d'air ne circule dans l'échangeur de chaleur. Le dispositif de fermeture 70 est mis dans cette position lorsque l'échangeur de chaleur n'est pas en service. Le dispositif de fermeture supérieur anti-pluie 90 est également mis en position de fermeture étanche sur sa surface d'appui 80.

Pour la mise en service de l'échangeur de chaleur, on descend le dispositif de fermeture 70 et l'on relève le dispositif de fermeture 90, grâce à leurs ensembles de levage respectifs. Le dispositif 70 vient reposer par l'intermédiaire des pattes 51, sur la structure 2 du réacteur et le dispositif 90 est maintenu dans sa position supérieure 90'. L'air peut alors circuler dans l'échangeur de chaleur suivant la direction indiquée par les flèches 20. On peut remarquer que dans la position basse 70' du dispositif de fermeture, la partie supérieure du couvercle 45 favorise le guidage de l'air vers la hotte d'entrée 40 du conduit 5.

Les principaux avantages de l'échangeur de chaleur suivant l'invention sont qu'il présente une grande surface d'échange et une structure simple, compacte et unitaire. L'échangeur de chaleur est fabriqué, assemblé et contrôlé en usine et amené dans son ensemble sur le site où il est introduit dans le local qui lui est réservé. On effectue alors le raccordement par soudage des conduits d'arrivée et d'évacuation de sodium à des conduits correspondants maintenus en attente et reliés au circuit secondaire de l'échangeur sodium-sodium. D'autre part, la perte de charge sur le circuit d'air est très faible grâce à la disposition des tubes en cage d'écureuil, si bien qu'il est possible d'assurer la circulation de l'air en convection naturelle.

L'échangeur de chaleur suivant l'invention subit également des contraintes thermiques ou mécaniques en service modérées dans ses différentes parties, à cause de sa symétrie et du fait qu'il est relié au bâtiment du réacteur nucléaire par des dispositifs de fixation situés à l'extérieur de l'enveloppe de l'échangeur de chaleur, c'est-à-dire dans une zone à une température modérée et non soumise à des courants de convection.

L'échangeur de chaleur suivant l'invention peut également être facilement protégé contre les sollicitations accompagnant un séisme.

De plus, dans le cas du mode de réalisation préférentiel, les dispositifs de fermeture ont une structure et un fonctionnement simples et assurent une fermeture efficace du conduit d'arrivée d'air ; la manœuvre pour leur ouverture ou leur fermeture est extrêmement fiable, ces dispositifs étant entraînés et parfaitement guidés entre ces deux positions ; dans leur position d'ouverture, les couvercles concourent au guidage de l'air dans l'échangeur de chaleur.

L'invention ne se limite pas au mode de réalisation qui a été décrit.

C'est ainsi que les collecteurs toriques peuvent avoir une section méridienne non seulement de forme rectangulaire mais encore carrée, circulaire ou elliptique. Le nombre de rangées de tubes d'échange peut être supérieur ou inférieur à trois ; deux rangées au moins sont souhaitables lorsqu'on désire obtenir une surface d'échange et un parcours de l'air de refroidissement donnant des conditions d'échange adéquates. On peut concevoir également des échangeurs comportant un nombre de rangées de tubes bien supérieur, par exemple cinq rangées.

L'enveloppe de la partie d'échange peut avoir d'autres formes que la forme bitronconique qui a été décrite. On peut par exemple imaginer une enveloppe constituée par des parties planes assemblées suivant des troncs de pyramide. De même, les déflecteurs d'air à l'intérieur de l'enveloppe peuvent avoir des formes différentes des formes coniques qui ont été décrites.

On peut envisager d'autres formes du couvercle inférieur 45, par exemple un couvercle de forme conique permettant le guidage de l'air dans la position d'ouverture du dispositif, jusqu'à l'entrée de la hotte 40. Dans le cas d'un couvercle de forme bombée, cette forme peut être aussi bien sphérique qu'ovoïde. Le couvercle peut être guidé par un ensemble de colonnes dont le nombre est différent de 4, à partir du moment où ce nombre est au moins égal à 2.

Au lieu d'un ensemble de levage comportant un motoréducteur, des chaînes et des poulies à chaînes, on peut envisager un ensemble de levage comportant d'autres systèmes mécaniques d'actionnement tels que des systèmes à câbles ou autres liens flexibles et à poulies, des systèmes vis-écrou, des vérins électriques, hydrauliques ou pneumatiques, un ensemble pignon-crémaillère ou encore tout autre moyen connu de levage d'une structure.

On peut également envisager d'autres formes pour le couvercle supérieur 85 et d'autres moyens de guidage et de déplacement que ceux qui ont été décrits.

Dans le cas du dispositif de fermeture inférieur, les contrepoids peuvent être choisis pour équilibrer exactement le poids du dispositif de fermeture ou de préférence avoir un poids un peu supérieur pour exercer par leur action, sur le dispositif de fermeture, dans sa position haute, une pression, sur l'extrémité de fermeture du conduit d'arrivée d'air. La transmission de mouvement peut se faire par l'intermédiaire de limiteurs d'effort tels que des boîtes à ressort ou au contraire directement.

Dans le cas du dispositif de fermeture supérieur, les contrepoids n'équilibrent que partiellement le poids du couvercle ; ainsi le couvercle exerce lui-même une pression sur le joint d'étanchéité.

L'échangeur de chaleur peut ne comporter qu'un dispositif de fermeture, en position haute ou en position basse associé éventuellement à un jeu de ventelles disposé dans le conduit (d'arrivée ou d'évacuation d'air) auquel n'est pas associé de dispositif de fermeture.

Les parois des couvercles 45 et 85 peuvent être réalisés en acier inoxydable ou en acier ordinaire protégé par une projection au pistolet d'acier inoxydable ou par un traitement d'aluminisation.

L'échangeur de chaleur n'est pas limité au refroidissement du sodium liquide secondaire ou primaire d'un réacteur nucléaire à neutrons rapides, mais peut être utilisé pour le refroidissement de tout métal liquide ou de tout autre fluide utilisé dans le domaine de la production d'énergie ou dans d'autres domaines de l'industrie tels que le domaine de l'industrie chimique. Ces fluides sont par exemple des métaux ou des sels fondus, de l'eau chaude, des solutions contenant des produits radio-actifs des fluides organiques, des gaz liquéfiés ou des gaz chauds.

**0 178 215**

En particulier, ces échangeurs de chaleur peuvent être utilisés pour le refroidissement d'eau ou de vapeur d'eau, éventuellement à très haute température et sous pression, dans les centrales nucléaires comportant un réacteur à eau sous pression.

Dans cette application particulière, l'utilisation d'un dispositif de fermeture étanche de la base du conduit d'entrée d'air a également une grande importance, pour éviter un refroidissement trop important de l'eau restant dans l'échangeur de chaleur, lorsque cet échangeur n'est pas en service.

## Revendications

1. Echangeur de chaleur pour le refroidissement d'un fluide par de l'air comportant un ensemble de tubes verticaux (15) disposés dans une zone balayée par un courant d'air de refroidissement suivant au moins une rangée (15a, 15b, 15c) dans laquelle les axes des tubes (15) sont disposés suivant des génératrices régulièrement espacées d'une surface cylindrique à axe vertical et reliés à leur extrémité supérieure à un collecteur (12) d'arrivée et de distribution de fluide chaud et à leur extrémité inférieure à un collecteur (14) de récupération de fluide refroidi, ces collecteurs (12, 14) étant de forme torique et ayant pour axe de révolution l'axe de la surface cylindrique sur laquelle sont disposés les axes des tubes (15), caractérisé par le fait :

que la portion d'espace de forme cylindrique limitée par la rangée de tubes (15a, 15b, 15c) est fermée à sa partie supérieure par un déflecteur d'air (30) et mise en communication à sa partie inférieure en-dessous des tubes (15) avec un conduit vertical d'arrivée d'air de refroidissement (5),

et que l'ensemble des tubes (15) est entouré sur toute sa hauteur par une enveloppe (10) dont le volume interne est en communication à sa partie supérieure avec un conduit vertical (8) d'évacuation de l'air de refroidissement ayant circulé au contact des tubes (15) entre la portion d'espace située à l'intérieur de la rangée de tubes (15a, 15b, 15c) et le volume interne de l'enveloppe (10) à l'extérieur de la rangée de tubes.

2. Echangeur de chaleur suivant la revendication 1, caractérisé par le fait que le collecteur inférieur repose sur une plaque support (22) elle-même fixée par l'intermédiaire de dispositifs de fixation (24, 25) sur les parois d'un local (1) renfermant l'échangeur de chaleur.

3. Echangeur de chaleur suivant la revendication 2, caractérisé par le fait que les dispositifs de fixation (24, 25) sont des tirants de suspension dont une partie au moins est associée à des dispositifs autobloquants anti-séismes (26).

4. Echangeur de chaleur suivant l'une quelconque des revendications 1 à 3, caractérisé par le fait que le collecteur supérieur (12) est guidé axialement par rapport aux parois d'un local (1) dans lequel est disposé l'échangeur de chaleur par l'intermédiaire de tirants (31) associés à des dispositifs anti-sismiques et autobloquants (32).

5. Echangeur de chaleur suivant l'une quelconque des revendications 1 à 4, caractérisé par le fait que l'enveloppe (10) entourant les tubes (15) a une forme bitronconique et un axe de révolution vertical.

6. Echangeur de chaleur suivant l'une quelconque des revendications 1 à 5, caractérisé par le fait qu'il comporte au moins un dispositif de fermeture (70, 90) associé à l'un au moins des conduits d'arrivée (5) ou d'évacuation (8) d'air de refroidissement et constitué par un couvercle plein (45, 85) d'une forme et d'une dimension correspondant sensiblement à celles de la section transversale du passage interne du conduit (5, 8) ou de l'extrémité de l'enveloppe (10) en communication avec le conduit (5, 8) ayant une partie d'appui (46, 86) à sa périphérie, le dispositif de fermeture (70, 90) étant mobile dans la direction verticale et associé à des moyens de guidage (51, 52, 53, 91, 92, 93) et à des moyens de déplacement (65, 66, 94, 95), entre une position de fermeture (70, 90) où le dispositif est en appui par sa partie périphérique (46, 86) sur une surface de fermeture (41, 80) du conduit (5, 8) ou de l'enveloppe (10) par l'intermédiaire d'un joint d'étanchéité (50, 87) et une position d'ouverture (70', 90') où le dispositif est éloigné de la surface de fermeture (41, 80) du conduit (5, 8) ou de l'enveloppe (10).

7. Echangeur de chaleur suivant la revendication 6, caractérisé par le fait que la partie supérieure (10a) de l'enveloppe (10) a la forme d'un tronc de cône dont la petite base est située à l'extrémité supérieure et constitue la surface de fermeture (80), que le conduit d'évacuation (8) de l'air de refroidissement comporte une partie inférieure élargie (81) entourant la partie supérieure (10a) de l'enveloppe (10) et constituant avec cette enveloppe un espace annulaire (84) fermé à sa partie inférieure, et que le couvercle (85) du dispositif de fermeture (90) comporte une paroi supérieure (85a) inclinée vers le bas du centre du couvercle (85), vers sa périphérie et une paroi inférieure (85b) inclinée vers le bas de sa périphérie, vers le centre du couvercle, fixées l'une sur l'autre, par l'intermédiaire de pièces de liaison comportant la partie périphérique d'appui (86) du couvercle (85) de façon que la paroi supérieure (85a) constitue une surface de guidage vers l'espace annulaire (84), de l'eau de pluie pénétrant par la cheminée et le conduit (8) dans sa position basse de fermeture du dispositif (90) et que la paroi inférieure (85b) constitue une surface de guidage de l'air de refroidissement vers la cheminée (8), lorsque le dispositif (90) est en position haute d'ouverture.

8. Echangeur de chaleur suivant la revendication 7, caractérisé par le fait que la paroi supérieure (85a) du couvercle (85) est une paroi conique dont le sommet est dirigé vers la cheminée (8) et que la paroi inférieure (85b) du couvercle (85) est une paroi conique dont le sommet est dirigé vers l'intérieur de l'enveloppe (10), ces deux parois coniques (85a, 85b) étant reliées par l'intermédiaire de leurs bases.

9. Echangeur de chaleur suivant l'une quelconque des revendications 7 et 8, caractérisé par le fait que les moyens de guidage du couvercle (85) sont constitués par des tiges verticales (91) fixées sur la paroi supérieure du couvercle (85a) et par des paliers à rotules inverses (92) solidaires du conduit d'évacuation (8), destinées à guider les tiges (91) pendant le déplacement du couvercle (85).

10. Echangeur de chaleur suivant la revendication 6, caractérisé par le fait que la surface de fermeture (41) est située sur le conduit (5) d'arrivée d'air de refroidissement ou à la partie inférieure de l'enveloppe (10), le dispositif de fermeture (70) ayant une position haute de fermeture et une position basse (70') d'ouverture.

11. Echangeur de chaleur suivant la revendication 6, caractérisé par le fait que le déflecteur d'air (30) fermant la portion d'espace limitée par les tubes (15) est une paroi conique dont la base est fixée au collecteur supérieur (12) et dont le sommet est dirigé vers l'intérieur de l'espace limité par les tubes (15) et que ce déflecteur conique (30) est associé à un second déflecteur conique (33) dont la base est fixée au collecteur supérieur (12) et dont le sommet est dirigé vers l'extérieur de l'espace limité par les tubes (15), les deux déflecteurs (30, 33) limitant un espace fermé, entre eux.

12. Echangeur de chaleur suivant la revendication 11, caractérisé par le fait que le réservoir d'expansion (106) du fluide à refroidir dans l'échangeur de chaleur est disposé dans l'espace fermé limité par les déflecteurs (30, 33).

13. Echangeur de chaleur suivant l'une quelconque des revendications 1 à 12, caractérisé par le fait que des ventelles de réglage (28, 35) du débit d'air de refroidissement sont disposées dans l'un au moins des deux conduits (5, 8) d'arrivée et d'évacuation de l'air de refroidissement.

14. Echangeur de chaleur suivant l'une quelconque des revendications 1 à 13, caractérisé par le fait qu'un ventilateur est disposé dans le conduit (5) d'arrivée d'air de refroidissement.

**Claims**

1. A heat exchanger for cooling a fluid with air, comprising a group of vertical tubes (15) disposed in a zone which is swept through by a current of cooling air in at least one row in which the axes of the tubes (15) are disposed along generatrices which are evenly spaced apart of a cylindrical surface having a vertical axis and connected at their upper end to a manifold supplying and distributing hot fluid and at their lower end to a manifold (14) recovering cooled fluid.

These manifolds (12, 14) being toric and having for their axis of revolution the axis of the cylindrical surface on which the axes of the tubes (15) are disposed, characterized by the fact that :

the portion of space of cylindrical shape defined by the row of tubes (15a, 15b, 15c) is closed in its upper part by an air deflector (30) and put in communication in its lower part below the tubes (15) with a vertical cooling air supply conduit (5) ;

and that the group of tubes (15) is surrounded throughout its height by a case (10) whose internal volume is in communication in its upper part with a vertical conduit (8) for discharging cooling air which has circulated in contact with the tubes (15) between the portion of space within the row of tubes (15a, 15b, 15c) and the internal volume of the case (10) outside the row of tubes.

2. A heat exchanger according to claim 1, characterized by the fact that the lower manifold bears against a support plate (28) which is fixed through fixing devices (24, 25) to the walls of a premises (1) enclosing the heat exchanger.

3. A heat exchanger according to claim 2, characterized by the fact that the fixing devices (24, 25) are suspension stays at least a part of which is associated with anti-earthquake selflocking devices (26).

4. A heat exchanger according to any one of the claims 1 to 3, characterized by the fact that the upper manifold (12) is axially guided relative to the walls of a premises (1) in which the heat exchanger is disposed through the medium of stays (3) associated with anti-earthquake and selflocking devices (32).

5. A heat exchanger according to any one of the claims 1 to 4, characterized by the fact that the case (10) surrounding the tubes (15) has a bifrustoconical shape and a vertical axis of revolution.

6. A heat exchanger according to any one of the claims 1 to 5, comprising at least one closing device (70, 90) associated with at least one of the cooling air supply (5) or discharge (8) conduits and constituted by a solid cover (45, 85) having a shape and a dimension substantially corresponding to the shape and dimension of the cross-section of the internal passage of the conduit (5, 8) or of the end of the case (10) communicating with the conduit (5, 8) having a bearing portion (46, 86) on its periphery, the closing device (70, 90) being movable the vertical direction and associated with guide means (51, 52, 53, 91, 92, 93) and means for shifting it (65, 66, 94, 95) between a closing position (70, 90) in which the device bears by its peripheral portion (46, 86) against a closing surface (41, 80) of the conduit (5, 8) or of the case (10) through a sealing element (50, 87), and an opening position (70', 90') in which the device is spaced from the closing surface (41, 80) of the conduit (5, 8) or case (10).

7. A heat exchanger according to claim 6, characterized by the fact that the upper part (10a) of the case (10) has the shape of a truncated cone whose small base is located at the upper end and constitutes the closing surface (80), the cooling air discharge conduit (8) comprises an enlarged lower part (81) surrounding the upper part (10a) of the case (10) and constituting with said case an annular space (84) closed in its lower part, and the cover (85) of the closing device (90) has an upper wall (85a) which is downwardly inclined from the centre of the cover (85) toward its periphery and a lower wall (85b) which is downwardly inclined from its periphery toward the centre of the cover, said walls being fixed to each other through connecting elements comprising the peripheral bearing part (86) of the cover (85) so that the upper wall (85a) constitutes a surface for guiding toward the annular space (84) rain water entering through the stack and the conduit (8) in the lower closing position of the device (90) and the lower wall (85b) constitutes a surface for guiding cooling air toward the stack (8) when the device (90) is in its upper opening position.

8. A heat exchanger according to claim 7, characterized by the fact that the upper wall (85a) of the cover (85) is a conical wall whose apex is oriented toward the stack (8) and the lower wall (85b) of the cover (85) is a conical wall whose apex is oriented toward the interior of the case (10), these two conical walls (85a, 85b) being interconnected at their bases.

9. A heat exchanger according to claim 7 or 8, characterized by the fact that the means for guiding the cover (85) comprise vertical rods (91) fixed to the upper wall of the cover (85a) and inverted ball-joint bearings (92) connected to the discharge conduit (8) and adapted to guide the rods (91) during the movement of the cover (85).

10. A heat exchanger according to claim 6, characterized by the fact that the closing surface (41) is located on the cooling air supply conduit (5) or in the lower part of the case (10), the closing device (70) having an upper closing position and a lower opening position (70').

11. A heat exchanger according to claim 6, characterized by the fact that the air deflector (30) closing the portion of space defined by the tubes (15) is a conical wall whose base is fixed to the upper manifold (12) and whose apex is oriented toward the interior of the space defined by the tubes (15), and said conical deflector (30) is associated with a second conical deflector (33) whose base is fixed to the upper manifold (12) and whose apex is oriented toward the exterior of the space defined by the tubes (15), the two deflectors (30, 33) defining therebetween a closed space.

12. A heat exchanger according to claim 11, characterized by the fact that the expansion reservoir (106) for the fluid to be cooled in the heat exchanger is disposed in the closed space defined by the deflector (30, 33).

13. A heat exchanger according to any one of the claims 1 to 12, characterized by the fact that air valves (28, 35) for regulating the flow of cooling air are disposed in at least one of the cooling air supply and discharge conduits (5, 8).

14. A heat exchanger according to any one of the claims 1 to 13, characterized by the fact that a fan is disposed in the cooling air supply conduit (5).

**Patentansprüche**

1. Wärmetauscher zur Kühlung eines Fluids durch Luft, bestehend aus einer Gruppe von vertikalen Rohren (15), die sich in einer von Kühlluft durchströmten Zone längs wenigstens einer Reihe (15a, 15b, 15c) befinden, in welcher die Achsen der Rohre (15) längs regelmäßig beabstandeter Mantellinien einer zylindrischen Oberfläche mit vertikaler Achse angeordnet und an ihrem oberen Ende mit einem Eingangs-Zuführungskollektor (12), der das warme Fluid verteilt, und an ihrem unteren Ende mit einem das abgekühlte Fluid rückgewinnenden Kollektor (14) verbunden sind, wobei diese Kollektoren (12, 14) eine torusartige Form aufweisen und als Drehachse die Achse der zylindrischen Oberfläche, auf welcher die Achsen der Rohre (15) angeordnet sind, besitzen gekennzeichnet durch die Tatsache,

daß der zylindrische Zwischenraum, begrenzt durch die Reihe der Rohre (15a, 15b, 15c), an seiner oberen Seite durch einen Luftdeflektor (30) abgeschlossen ist und an seiner unteren Seite unterhalb der Rohre (15) in Verbindung mit einer vertikalen Kühllufteingangsleitung (5) steht und

daß die Gruppe der Rohre (15) in ihrer ganzen Höhe von einem Mantel (10) umgeben ist, dessen inneres Volumen in seinem oberen Teil mit einer vertikalen Leitung (8) zum Auslaß der Kühlluft in Verbindung steht, welche in Kontakt mit den Rohren (15) zwischen dem Raumteil im Inneren der Reihe von Rohren (15a, 15b, 15c) und dem internen Volumen des Mantels (10) außerhalb der Rohrreihe zirkuliert ist.

2. Wärmetauscher nach Anspruch 1, gekennzeichnet durch die Tatsache, daß der untere Kollektor auf einem Plattenuntersatz (22) ruht, der mit Hilfe von Aufhängungen (24, 25) an den Wänden eines den Wärmetauscher einschließenden Raumes befestigt ist.

3. Wärmetauscher nach Anspruch 2, gekennzeichnet durch die Tatsache, daß die Aufhängungen (24, 25) aus Seilzügen bestehen, wovon wenigstens ein Teil mit selbstblockierenden Antierdbebenvorrichtungen (26) verbunden ist.

4. Wärmetauscher nach einem der Ansprüche 1 bis 3, gekennzeichnet durch die Tatsache, daß der obere Kollektor (12) axial zu den Wänden eines Raumes (1), in dem der Wärmetauscher angebracht ist, mit Hilfe von Zugankern (31) geführt ist, die mit selbstblockierenden Antierdbebenvorrichtungen (32) versehen sind.

5. Wärmetauscher nach einem der Ansprüche 1 bis 4, gekennzeichnet durch die Tatsache, daß der die Rohre (15) einschließende Mantel (10) eine doppelkegelstumpfartige Form mit einer vertikalen Rotationsachse hat.

6. Wärmetauscher nach einem der Ansprüche 1 bis 5, gekennzeichnet durch die Tatsache, daß er wenigstens eine Verschlußvorrichtung (70, 90) aufweist, die mit wenigstens einer Kühlluftzuführleitung (5) oder Kühlluftauslaßleitung (8) verbunden ist, aus einem flachen Deckel (45, 85) einer Form und Dimension, die gerade denen des Querschnitts der inneren Weite der Leitung (5, 8) oder des Endes des Mantels (10) in Verbindung mit der Leitung (5, 8) entsprechen, besteht und an seinem Umfang einen Auflageteil (46, 86) besitzt, welche Schließvorrichtung (70, 90) in vertikaler Richtung beweglich und mit Führungsvorrichtungen (51, 52, 53, 91, 92, 93) und mit Verschiebungsvorrichtungen (65, 66, 94, 95) zwischen einer Schließposition (70, 90), in der die Vorrichtung mit ihrem peripheren Teil auf einer Schließfläche (41, 80) der Leitung (5, 8) oder des Mantels (10) mit Hilfe einer Dichtung (50, 87) aufliegt und einer Öffnungsposition (70', 90') verbunden ist, in der die Vorrichtung von der Schließfläche (41, 80) der Leitung (5, 8) oder des Mantels (10) entfernt ist.

7. Wärmetauscher nach Anspruch 6, gekennzeichnet durch die Tatsache, daß der obere Teil (10a) des Mantels (10) die Form eines Kegelstumpfes hat, dessen kleine Basis am oberen Ende sitzt und die Schließfläche (80) bildet, daß die Auslaßleitung (8) der Kühlluft einen unteren erweiterten Teil (81) aufweist, der den oberen Teil (10a) des Mantels (10) umgibt und mit diesem Mantel einen ringförmigen Zwischenraum (84) bildet, der nach seiner unteren Seite geschlossen ist, und daß der Deckel (85) der Schließvorrichtung (90) eine obere Abschirmung (85a), die vom Zentrum des Deckels (85) zum Rand hin nach unten geneigt ist, und eine untere Abschirmung (85b) aufweist, die vom Rand her nach unten zum Zentrum des Deckels geneigt ist, wobei die eine auf der anderen mit Hilfe von den peripheren Auflageteil (86) des Deckels (85) aufweisenden Verbindungsstücken derart fixiert sind, daß die obere Abschirmung (85a) in ihrer unteren schließenden Position der Vorrichtung (90) eine Leitoberfläche in Richtung des ringförmigen Hohlraums (84) für das durch den Luftschacht und die Leitung (8) eindringende Regenwasser bildet und daß die untere Abschirmung (85b) eine Leitfläche der Kühlluft in Richtung des Luftschachtes (8) bildet, sobald sich die Vorrichtung (90') in der hohen geöffneten Position befindet.

8. Wärmetauscher nach Anspruch 7, gekennzeichnet durch die Tatsache, daß die obere Abschirmung (85a) des Deckels (85) eine konische Abschirmung ist, deren Spitze in Richtung des Luftschachtes (8) gerichtet ist, und daß die untere Abschirmung (85b) des Deckels (85) eine konische Abschirmung ist, deren Spitze in Richtung des Inneren des Mantels (10) weist und die beiden konischen Abschirmungen mittels ihrer Basen verbunden sind.

9. Wärmetauscher nach einem der Ansprüche 7 und 8, gekennzeichnet durch die Tatsache, daß die Führungsvorrichtungen des Deckels (85) aus vertikalen Stangen (91), die auf der oberen Abschirmung (85a) des Deckels (85) befestigt sind, und aus Lagern (92) mit inversen Kugelgelenken gebildet sind, die kraftschlüssig fest mit der Auslaßleitung (8) verbunden und zum Führen der Stangen (91) während der Verschiebung des Deckels (85) bestimmt sind.

10. Wärmetauscher nach Anspruch 6, gekennzeichnet durch die Tatsache, daß die Schließfläche (41) sich über der Kühlluftzuführleitung (5) oder am unteren Teil des Mantels (10) befindet, wobei die Schließvorrichtung (70) eine hohe Schließposition und eine untere Öffnungsposition (70') hat.

11. Wärmetauscher nach Anspruch 6, gekennzeichnet durch die Tatsache, daß der Luft-Deflektor (30), der den Raumteil abschließt, der durch die Rohre (15) begrenzt wird, eine konische Wand ist, deren Basis am oberen Kollektor (12) befestigt ist und deren Spitze zum Inneren des durch die Rohre (15) begrenzten Raumes weist, und daß dieser konische Deflektor (30) mit einem zweiten konischen Deflektor (33) verbunden ist, dessen Basis am oberen Kollektor (12) befestigt ist und dessen Spitze nach außerhalb des durch die Rohre (15) begrenzten Raumes weist, so daß die beiden Deflektoren (30, 33) einen geschlossenen Raum zwischen sich einschließen.

12. Wärmetauscher nach Anspruch 11, gekennzeichnet durch die Tatsache, daß der Expansionsbehälter (106) des im Wärmetauscher zu kühlenden Fluids sich im geschlossenen, durch die beiden Deflektoren (30, 33) begrenzten Raum befindet.

13. Wärmetauscher nach einem der Ansprüche 1 bis 12, gekennzeichnet durch die Tatsache, daß Öffnungsklappen (28, 35) zur Regelung des Kühlluftdurchsatzes mindestens in einer der beiden Einlaß- und Auslaßleitungen (5, 8) der Kühlluft angebracht sind.

14. Wärmetauscher nach einem der Ansprüche 1 bis 13, gekennzeichnet durch die Tatsache, daß ein Ventilator in der Kühllufteinlaßleitung (5) angebracht ist.

Fig 1

0 178 215

# Fig 2

15

14

18

# Fig 3

14

24

D

22

# Fig 2a

15b

15a

15

15c

# Fig 3a

22

24a

24

34

36

FIG.5

FIG.5A

FIG. 6B

FIG. 6A

0 178 215